# EUROPÄISCHE PATENTANMELDUNG

(11) **EP 0 589 271 A1**
(43) Veröffentlichungstag der Anmeldung: **30.03.1994**
(21) Anmeldenummer: 93114239.2
(22) Anmeldetag: 06.09.1993
(51) Int. Cl.: B25B 23/14, G01L 5/24

(54) **Verfahren und Vorrichtung zum ultraschallgesteuerten Festziehen von Schrauben**

(30) Priorität: 19.09.1992 DE 4231429
(71) Anmelder: ROBERT BOSCH GMBH, 70442 Stuttgart (DE)
(72) Erfinder: Layer, August, Dr. Dipl.-Ing., D-74613 Oehringen (DE); Veitinger, Heinz, Dipl.-Ing., D-71540 Murrhardt (DE)

(57) **Zusammenfassung**

Es wird ein Schraubverfahren und eine Schraubvorrichtung vorgeschlagen, bei der die Überwachung des Anziehvorganges mittels eines Ultraschall-Meßverfahrens durchgeführt wird. Dabei wird am Schraubenkopf (1) ein Ultraschall-Sensor (2) angeordnet, der US-Impulse in die Schraube (20) schickt. Durch Vergleich von Laufzeitmessungen der US-Impulse bei der unbelasteten und belasteten Schraube (20) wird auf die Spannung der Schraube (20) geschlossen. Die Übertragung der elektrischen Impulse kann über Draht (9), Schleifringe oder berührungslos erfolgen.

## Beschreibung

### Stand der Technik

Die Erfindung geht aus von einem Verfahren und einer Schraubvorrichtung zum Festziehen einer Schraube oder Mutter mit einer Schraubvorrichtung nach der Gattung des Hauptanspruchs. Es ist schon ein Schraubverfahren bzw. eine Schraubvorrichtung bekannt, bei der eine Schraube im Zweistufen-Verfahren bis zum Erreichen der Streckgrenze angezogen wird. Aus der DE-28 03 675 C2 ist weiter bekannt, zum Festziehen eines Schraubverbindungselementes den Drehwinkel und das Drehmoment zu messen. Nach Erreichen eines bestimmten Wertes wird das Schraubverbindungselement um einen vorgegebenen Winkel weitergedreht. Bei allen diesen Schraubverfahren ist nachteilig, daß das aufzuwendende Drehmoment zum Festziehen des Schraubelementes zum größten Teil für die Überwindung der Reibung sowohl des aufliegenden Schraubenkopfes als auch des Gewindes verbraucht wird. Nur ein geringer Teil des in den Schraubenkopf eingeleiteten Drehmoments steht zum Aufbauen der Schrauben-Vorspannkraft zur Verfügung, so daß diese Vorspannkraft sehr ungenau und damit kaum reproduzierbar ist. So ist auch bei automatisch arbeitenden Schraubvorrichtungen mit großen Fertigungstoleranzen zu rechnen.

Es ist weiter bekannt, die mechanischen Spannungen in einer Schraube mittels eines Ultraschall-Verfahrens dadurch zu messen, daß ein Ultraschall-Impuls in die Schraube geschickt wird, wobei die Laufzeit bis zum Empfang des Echosignals gemessen wird. Da sich die Laufzeit in Abhängigkeit von der Spannung der Schraube ändert, kann durch Vergleich der Laufzeiten bei der entspannten und der gespannten Schraube auf die Dehnung der Schraube geschlossen werden. Ein nach diesem Prinzip arbeitendes Gerät vom Typ Bolt Mike SM II der Fa. Krautkrämer ist auf dem Markt erhältlich. Mit diesem Gerät ist an festgezogenen Schrauben auch nachträglich die Spannung der Schraube meßbar. Zum Steuern eines Verschraubungsvorgangs arbeitet das Gerät aber zu langsam.

### Vorteile der Erfindung

Das erfindungsgemäße Verfahren bzw. die Schraubvorrichtung hat demgegenüber den Vorteil, daß das Anziehen der Schraubverbindung unter Kontrolle des Ultraschall-Meßverfahrens erfolgt. Die unter dem Schraubenkopf und im Gewinde auftretende Reibung wird bei der Bewertung des Drehmomentes zum Festspannen der Schraubverbindung eliminiert. Es wird also nicht mehr auf ein bestimmtes Drehmoment hin, sondern auf eine vorgegebene Vorspannkraft hin angezogen Besonders vorteilhaft ist, daß dadurch die Schraubverbindung genau und reproduzierbar angezogen werden kann. Besonders vorteilhaft ist, daß die Schraubverbindung ohne Unterbrechung für die Messung angezogen werden kann.

Durch die in den abhängigen Ansprüchen aufgeführten Maßnahmen sind vorteilhafte Weiterbildungen und Verbesserungen des im Hauptanspruch angegebenen Verfahrens bzw. der Schraubvorrichtung gegeben. Besonders vorteilhaft ist, daß der Ultraschall-Sensor mittels eines Koppelmittels oder ohne Koppelmittel derart akustisch an der Schraube angekoppelt ist, daß Longitudinal- und/oder Transversalwellen in der Schraube erzeugt werden. Dadurch kann die Längenänderung der Schraube genau erfaßt werden.

Vorteilhaft ist weiter, daß die US-Einrichtung eine US-Einheit aufweist, durch die mittels Kabel und Schleifringen oder berührungslos die Spannungs-Impulse auf den Sensor übertragbar sind. Dadurch ist in vorteilhafter Weise eine einfache Übertragung von der feststehenden US-Einheit zum sich drehenden US-Sensor gegeben, so daß auch problemlos hohe Spannungen oder Ströme übertragbar sind.

Günstig ist weiter, daß die Signalübertragungseinheit mit einer drahtlosen Signalübertragung an den US-Sensor ausgebildet ist. Durch induktive, kapazitive oder optische Übertragungsmittel können damit kontaktlos Steuersignale an den Sensor übertragen werden, wobei Übertragungsprobleme zu dem rotierenden Sensor vermieden werden.

Besonders vorteilhaft ist, daß in dem Anziehwerkzeug ein Temperatursensor angeordnet ist, der die Temperatur des Schraubkopfes oder der Schraube erfaßt. Dabei kann das Temperatursignal zur Korrektur des Meßergebnisses herangezogen werden, da die Laufzeit der Ultraschall-Impulse auch temperaturabhängig sind.

Vorteilhaft ist weiter, daß die ermittelten Meßwerte nicht nur zum Abschalten des Schraubvorganges verwendbar sind, sondern auch speicherbar sind. Dadurch kann bei späteren Kontrollmessungen ein Vergleich durchgeführt werden, der eine quantitative Aussage über den Zustand der Schraubverbindung zuläßt. Dieses ist insbesondere an Sicherheitseinrichtungen wie an Druckkesseln oder dergleichen wichtig.

Eine besonders einfache Ausführung der Signalübertragung zum US-Sensor wird durch eine Zentralelektrode gebildet. Diese kann drehbar auf dem Sensor oder auf dem Anziehwerkzeug gelagert sein, so daß sie wegen ihres geringen Platzbedarfes auch für kleine Anziehwerkzeuge vorteilhaft verwendbar ist.

Weitere Vorteile der Erfindung sind der Beschreibung entnehmbar.

### Zeichnung

Zwei Ausführungsbeispiele der Erfindung sind in der Zeichnung dargestellt und in der nachfolgenden Beschreibung näher erläutert. Es zeigen Figur 1 ein erstes Ausführungsbeispiel und Figur 2 ein zweites Ausführungsbeispiel, Figur 3 zeigt die Anordnung der Mittelelektrode und Figur 4 zeigt ein Flußdiagramm.

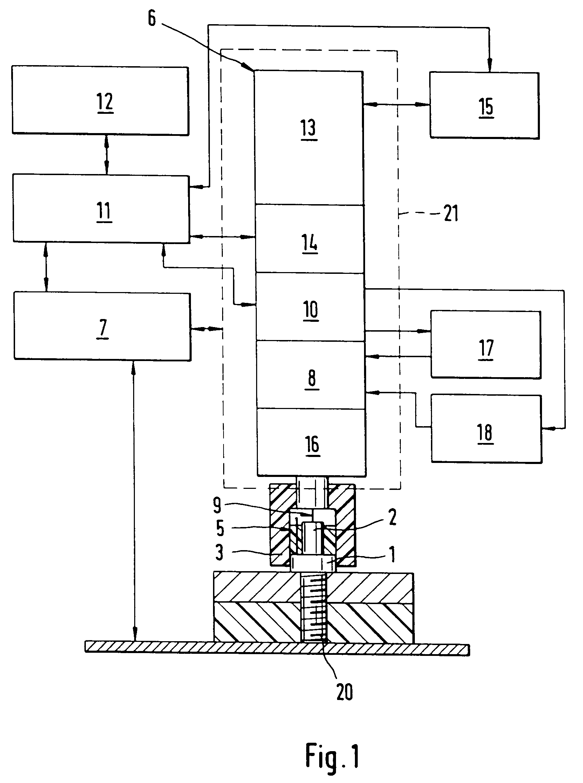

Figur 1 zeigt als Blockschaltbild ein erstes Ausführungsbeispiel einer elektrisch betriebenen Schraubvorrichtung 21, bei der ein Motor 13 mittelts eines Getriebes 16 ein Anziehwerkzeug 3 treibt. Das Anziehwerkzeug 3 weist einen Kopf auf, der zum Antrieb einer Schraube 20 mit einem Schraubenkopf 1 geeignet ist. Der Schraubenkopf 1 kann auch als Mutter ausgebildet sein, mit der eine entsprechende Schraube anziehbar ist. Der Motor 13 innerhalb der Schraubspindel 6 wird von einem Leistungsteil 15 versorgt, das von einer Schraubersteuerung 11 gesteuert wird. Dabei weist die Schraubersteuerung 11 eine Eingabe/Ausgabe 12 mit Bedienelementen und Anzeigen auf. An die Schraubspindel 6 ist ein erster Sensor 14 angeordnet, der beispielsweise als Drehmoment- oder Drehwinkelgeber ausgebildet ist. Der erste Sensor 14 ist mit der Schraubersteuerung 11 verbunden, an die er seine Meßsignale liefert. Die Schraubersteuerung 11 ist des weiteren mit einer Ultraschall-Einrichtung 10 verbunden, die die Spannungs-Impulse an einen Ultraschall-Sensor 2 liefert bzw. reflektierte Echosignale erhält. Der Ultraschall-Sensor 2 (US-Sensor) ist im Bereich des Anziehwerkzeugs 3 derart angeordnet, daß er seine Ultraschall-Impulse durch akustische Kopplung an die Schraube 20 übertragen kann. Zur Verbesserung der Koppeldynamik kann zwischen dem US-Sensor 2 und dem Schraubenkopf 1 ein Koppelmittel, z.B. Wasser, Öl eingefügt werden. Der US-Sensor 2 ist mittels eines Kabels 9 mit der Signalübertragungseinheit 8 und diese mit der Ultraschall-Einrichtung 10 verbunden. Das Kabel 9 kann als Koaxial-Kabel oder Mittelelektrode für die Übertragung der Spannungs-Impulse ausgebildet sein. Des weiteren ist im Anziehwerkzeug 3 ein Temperaturfühler 5 angeordnet, der die Temperatur des Schraubenkopfes 1 erfaßt. Die Temperatursignale des Temperaturfühlers 5 werden an die Ultraschall-Einrichtung 10 und eventuell an die Schraubersteuerung 11 übertragen. An die Ultraschall-Einrichtung 10 ist noch ein Dosiergerät zur Eingabe eines Koppelmittels angeschlossen. Zusätzlich wird über die Ultraschall-Einrichtung 10 eine Preßlufteinheit (Ventil) 18 angesteuert, mit der der Schraubenkopf und der US-Wandler gereinigt werden kann.

Die Schraubvorrichtung 21 mit der zugehörigen Schraubersteuerung 11 ist per se bekannt. Eine derartige Schraubersteuerung ist beispielsweise als Typ SE 200 (Fa. Bosch) auf dem Markt erhältlich. Die Beschreibung der einzelnen Komponenten ist daher nicht erforderlich.

Ein Meßgerät zur Durchführung des Ultraschall-Meßverfahrens ist als Bolt Mike SM II ebenfalls bekannt. Nähere Einzelheiten bezüglich des Meßverfahrens sind der Veröffentlichung "Schraubenspannungs-Messung mit Ultraschall", G. Spitt, Krautkrämer GmbH & Co., Seite 1 bis 4, entnehmbar.

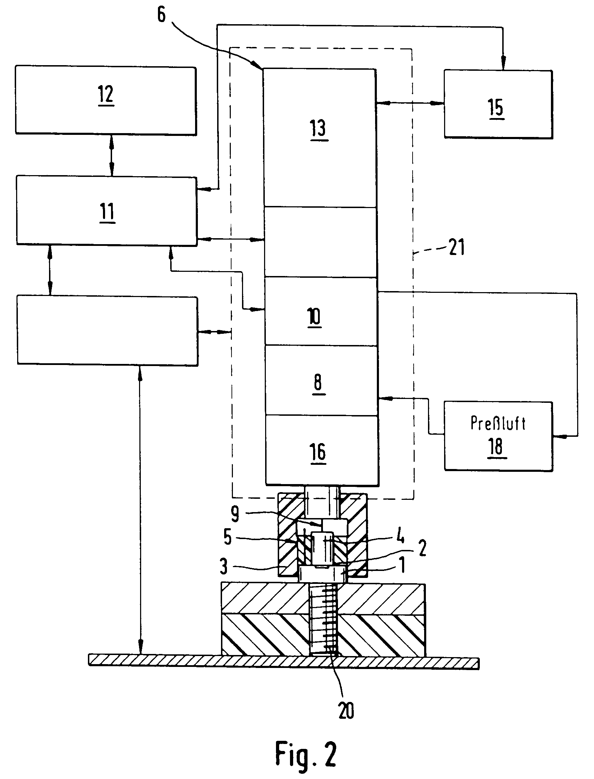

Figur 2 zeigt im wesentlichen den gleichen Aufbau der Schraubvorrichtung mit dem Unterschied, daß der US-Sensor 2 auf dem Schraubenkopf 1 fest angeordnet ist. Auch nach dem Einschrauben der Schraube verbleibt der Sensor auf der Schraube. Als Ultraschall-Sensor 2 wird beispielsweise eine piezoelektrische Schicht verwendet, die durch eine elektrische Spannung angeregt wird. Die Spannung wird über eine Zentralelektrode 4 zugeführt. Die Zentralelektrode 4 ist derart ausgebildet, daß sie relativ zum US-Sensor 2 feststehend oder drehbar gelagert ist.

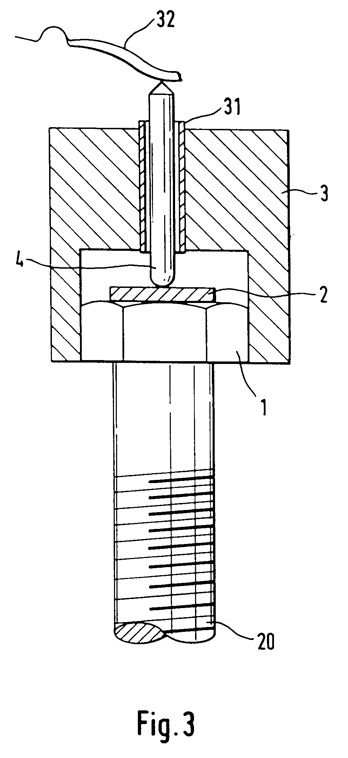

In einem bevorzugten Ausführungsbeispiel gemäß der Figur 3 dreht sich die Zentralelektrode 4 mit der Drehgeschwindigkeit des Anziehwerkzeuges 3 mit. Die Zentralelektrode 4 ist dabei als federnder Kontaktstift ausgebildet, der mittels einer schraubenförmigen Feder 32 gegen den US-Sensor 2 gedrückt wird. Die Hülse 31 ist isolierend gegenüber dem Anziehwerkzeug 3 ausgebildet. Die Spannungszuführung erfolgt über einen Kontakt 32, der als Schleifring oder Widerlager ausgebildet sein kann. Der Stromkreis wird geschlossen über den Schraubenkopf 1 und das Anziehwerkzeug 3, das als Masseleitung ausgebildet ist.

In einem weiteren Ausführungsbeispiel ist vorgesehen, die Mittelelektrode gegenüber dem sich drehenden Anziehwerkzeug 3 feststehend auszubilden. Die Spannungsübertragung zum US-Sensor erfolgt dann mit oder ohne einer Leitpaste, beispielsweise einer Silberleitpaste, die zwischen dem Sensor 2 und dem Fußpunkt der Mittelelektrode 4 aufgetragen sein kann.

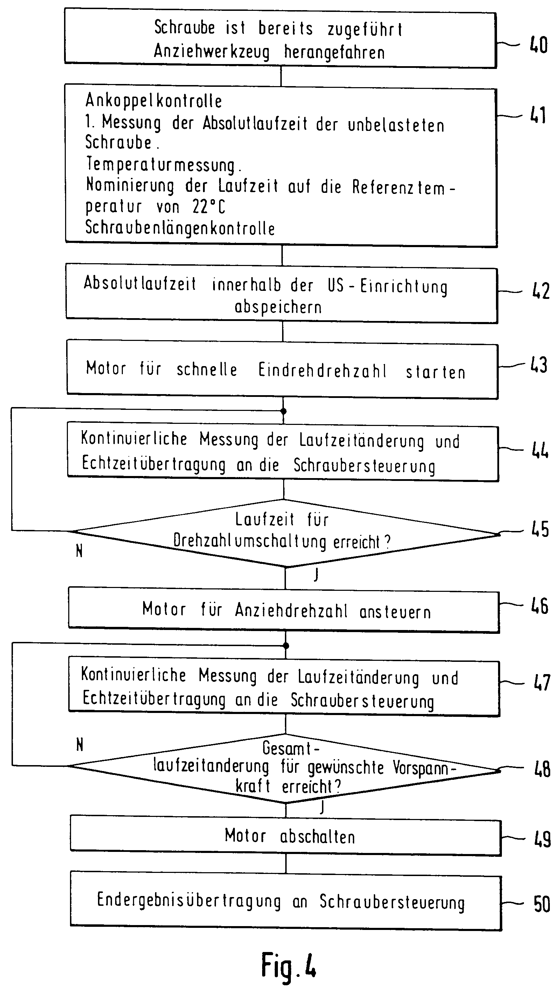

Im folgenden wird die Wirkungsweise des Schraubverfahrens anhand des Flußdiagramms der Figur 4 beschrieben. Zu Beginn des Schraubvorganges (Position 40) wird in Position 41 eine erste Messung der Laufzeit der Ultraschall-Impulse an der unbelasteten Schraube durchgeführt. In Position 42 wird die erste Messung zwischengespeichert. In Position 43 wird mittels der Schraubersteuerung 11, in die zuvor mittels der Eingabe/Ausgabe 12 die Daten für den Schraubvorgang eingegeben wurden, der Motor 13 gestartet, so daß das Anziehwerkzeug 3 die Schraube 20 eindreht. Dieses Eindrehen kann mit hoher Drehzahl erfolgen, denn die Wiederholrate der Laufzeitmessung (Position 44) ist ebenfalls sehr hoch. Diese Laufzeitänderungswerte werden in Echtzeit an die Schraubersteuerung 11 übertragen und dort mit einem durch die Eingabe 12 vorgegebenen Laufzeitänderungswert (Position 45) verglichen. Solange dieser Wert nicht erreicht ist, behält der Motor 13 seine vorgegebene Eindrehdrehzahl bei. Ist der Wert erreicht, veranlaßt die Schraubersteuerung 11 ein Umschalten der Motordrehzahl (Position 46) für den eigentlichen Schrauben-Anziehvorgang. Dabei wird immer kontinuierlich die Laufzeitänderung (Position 47) relativ zu dem unbelasteten Anfangszustand gemessen und an die Schraubersteuerung 11 übertragen.

Solange die von dem Eingabegerät 12 berechnete und an die Schraubersteuerung 11 mitgeteilte Laufzeitänderung für die gewünschte Vorspannkraft (Position 48) nicht erreicht ist, wird vom Motor 13 die Anziehdrehzahl beibehalten. Wird von der US-Einrichtung 10 die Laufzeitänderung für die gewünschte Vorspannkraft an die Schraubersteuerung 11 übertragen, veranlaßt die Schraubersteuerung, daß der Motor 13 abgeschaltet wird (Position 49). Nach dem Verschraubungsende führt die US-Einrichtung 10 noch eine abschließende, genaue Absolutlaufzeitmessung durch und macht eine Endergebnisübertragung (Position 50) an die Schraubersteuerung.

Der Sollwert zum Abschalten des Schraubvorganges gemäß der Position 48 kann entweder direkt in die Eingabe 12 eingegeben werden oder es kann ein Vorspannkraft-Referenzwert eingegeben werden. Die Referenzwerte für die Laufzeitänderung können einer Tabelle entnommen werden, die in einem entsprechenden Speicher abgelegt ist, wobei zu den Referenzwerten auch Temperaturkompensationswerte eingegeben sind. Die Referenzwerte der Tabelle wurden zuvor empirisch ermittelt. Liegen mehrere aufeinanderfolgende Meßwerte außerhalb einer vorgegebenen Kurve oder einem vorgegebenen Toleranzband, dann wird eine Fehlmessung angenommen. In diesem Fall wird der außerhalb liegende Meßwert unterdrückt und/oder gegebenenfalls eine Ersatzmessung durchgeführt.

Das in Figur 4 dargestellte Flußdiagramm gibt die Ablaufsteuerung für den Schraubvorgang an. Der Temperaturfühler 5 erfaßt die momentane Temperatur am Schraubenkopf 1 und gibt diese Temperatur an die US-Einrichtung (10) weiter. Die Sollwertvorgabe zum Abschalten des Schraubvorganges gemäß der Position 48 erfolgt dann wahlweise auch in Abhängigkeit von der Temperatur, die der Temperaturfühler 5 am Schraubenkopf mißt.

Bei dem Ausführungsbeispiel gemäß der Figur 1 ist der US-Sensor 2 im Anziehwerkzeug 3 fest angeordnet. Zwischen dem US-Sensor 2 und dem Schraubenkopf 1 ist ein Ankoppelspalt vorgesehen, in dem ein Koppelmedium, vorzugsweise ein Öl, Wasser oder eine ähnliche Dispersion mit relativ hoher Dichte angeordnet ist. Über das Ankoppelmittel erfolgt die Übertragung der Ultraschall-Impulse auf die Schraube, bzw. die Messung der Echosignale.

Beim Ausführungsbeispiel gemäß der Figur 2 ist der US-Sensor 2 bleibend auf dem Schraubenkopf 1 montiert (geklebt) oder durch ein entsprechendes Verfahren direkt auf den Schraubenkopf aufgebracht worden. Ein Koppelmittel ist hier nicht erforderlich.

In weiterer Ausgestaltung der Erfindung ist vorgesehen, bei dem Ausführungsbeispiel gemäß der Figur 1 den US-Sensor 2 mit einer Steuerelektronik zu versehen, die die empfangenen Echosignale auswertet. Die Übertragung von dem rotierenden US-Sensor 2 zur Ultraschall-Einrichtung 10 erfolgt drahtlos durch kapazitive, induktive oder optische Kopplung. Derartige Koppelmittel sind beispielsweise als Induktionsspulen oder Optokoppler bekannt.

Es ist weiter vorgesehen, den Ultraschallsensor 2 am Schaftende der Schraube 20 anzuordnen. Während des Einschraubens greift das Anziehwerkzeug der Schraubvorrichtung 21 am Schraubenkopf 1 an, während der Sensor 2 am Schaftende der Schraube 20 die Spannungsänderung mittels des beschriebenen Ultraschall-Meßverfahrens erfaßt. Entsprechend ist auch das Festziehen einer Mutter durchführbar, wobei in diesem Fall der Sensor 2 am Kopfteil oder Schaft der Schraube 20 angeordnet ist.

## Patentansprüche

1. Verfahren zum Festziehen einer Schraube oder Mutter mit einer Schraubvorrichtung mit einem Ultraschall-Sensor, der im Bereich (1) der Schraube (20) angeordnet ist und Ultraschallwellen an die Schraube (20) abgibt, wobei die Echos der abgegebenen Ultraschallwellen empfangen und einer Ultraschall-Einrichtung (10) zur Auswertung zugeführt werden, und daß das Festziehen der Schraube (20) in Abhängigkeit von den empfangenen und ausgewerteten Ultraschallwellen erfolgt, dadurch gekennzeichnet, daß vor oder bei Beginn des Schraubvorgangs eine erste Messung der Laufzeit der Ultraschallsignale in der Schraube (20) durchgeführt und der Meßwert zwischengespeichert wird, daß das Arziehwerkzeug (3) das Eindrehen der Schraube (20) mit hoher Drehzahl so lange durchführt, bis bei weiteren Messungen eine signifikante Änderung der Laufzeit ermittelt wird, daß dann die Drehzahl des Anziehwerkzeuges (3) auf eine niedrigere Drehzahl heruntergeschaltet wird und daß bei weiteren, aufeinanderfolgenden Messungen die Meßwerte unterdrückt werden, die außerhalb einer vorgegebenen Kurve oder eines vorgegebenen Toleranzbandes liegen.

2. Verfahren nach Anspruch 1, dadurch gekennzeichnet, daß bei bestimmten Abweichungen zweier oder mehrerer aufeinanderfolgender Meßwerte durch eine Wichtung der Meßwerte eine Korrektur durchgeführt wird.

3. Schraubvorrichtung mit einem Anziehwerkzeug insbesondere zur Durchführung des Verfahrens nach Anspruch 1 oder 2, mit einer Ultraschall-Einrichtung zum Senden von Ultraschallwellen in eine festzuziehende Schraube sowie dem Empfang deren Echos und mit einer Schraubersteuerung, die ausgebildet ist, die Schraubvorrichtung bei Erreichen eines vorgegebenen Wertes für die Laufzeit der Ultraschallwellen in der Schraube abzuschalten, dadurch gekennzeichnet, daß die Ultraschall-Einrichtung (10) mit einem Ultraschall-Sensor (2) elektrisch verbunden ist, daß der Ultraschall-Sensor (2) an der festzuziehenden Schraube fest angebracht ist, Ultraschall-Signale in die Schraube einkoppelt und deren Echos empfängt, und daß die Ultraschall-Einrichtung (10) einen Speicher aufweist, in dem eine vorgegebene Kurve oder ein vorgegebenes Toleranzband für die Laufzeit der Ultraschallwellen gespeichert ist.

4. Schraubvorrichtung nach Anspruch 3, dadurch gekennzeichnet, daß der Ultraschall-Sensor (2) ausgebildet ist, in der Schraube Longitudinal- und/oder Transversalwellen zu erzeugen.

5. Schraubvorrichtung nach einem der Ansprüche 3 oder 4, dadurch gekennzeichnet, daß die Ultraschall-Einrichtung (10) mit einer Signalübertragungseinheit (8) verbunden ist, und daß die Signalübertragungseinheit (8) zur Übertragung der Spannungs-Signale oder Steuersignale an den Ultraschall-Sensor (2) ein Kabel (9) oder einen Schleifring aufweist.

6. Schraubvorrichtung nach einem der Ansprüche 3 bis 5, dadurch gekennzeichnet, daß die Signalübertragungseinheit (8) mit einer berührungslosen Signalübertragung an den Ultraschall-Sensor (2) ausgebildet ist.

7. Schraubvorrichtung nach einem der Ansprüche 3 bis 6, dadurch gekennzeichnet, daß am oder im Anziehwerkzeug ein Temperatursensor (5) angeordnet ist, der die Temperatur der Schraube (20) oder des Schraubenkopfes (1) erfaßt.

8. Schraubvorrichtung nach einem der Ansprüche 3 bis 7, dadurch gekennzeichnet, daß die ermittelten Abschaltwerte eines Schraubvorganges in einem weiteren Speicher speicherbar sind.

9. Schraubvorrichtung nach einem der Ansprüche 3 bis 8, dadurch gekennzeichnet, daß zwischen der Signalübertragungseinheit (8) und dem Ultraschallsensor (2) eine Zentralelektrode (4) angeordnet ist, die den Ultraschallsensor (2) an einer der Schraube abgewandten Seite kontaktiert.

10. Schraubvorrichtung nach Anspruch 9, dadurch gekennzeichnet, daß der Ultraschall-Sensor (2) am Schraubenkopf (1) fest angeordnet.

11. Schraubvorrichtung nach einem der Ansprüche 1 bis 9, dadurch gekennzeichnet, daß der Ultraschall-Sensor (2) am Schaftende der festzuziehenden Schraube (20) angeordnet ist.
